# EUROPEAN PATENT APPLICATION

(11) **EP 3 778 078 A1**
(43) Date of publication of application: **17.02.2021**
(21) Application number: 18912492.8
(22) Date of filing: 30.03.2018
(51) Int. Cl.: B23B 19/02

(54) **MAIN SHAFT DEVICE OF MACHINE TOOL**

(71) Applicant: Makino Milling Machine Co., Ltd., Tokyo 152-8578 (JP)
(72) Inventor: NEBUKA, Teppei, Aiko-gun, Kanagawa 243-0303 (JP); KAWADA, Takeshi, Aiko-gun, Kanagawa 243-0303 (JP)
(74) Representative: McWilliams, David John
(86) International application number: PCT/JP2018/013872
(87) International publication number: WO 2019/187103

(57) **Abstract**

A spindle device (10) of a machine tool in which a tool (T) or a workpiece is retained on a spindle (16), and which carries out machining by moving the tool and the workpiece relative to one another is provided with a support member (12) having a bearing surface (12b), a housing (14) which releasably contacts the support member on the bearing surface, and which rotatably supports the spindle, a first biasing device (28) which presses the housing against the support member, and a pressing force adjusting unit (100) which adjusts a pressing force of the first biasing device.

## Description

### FIELD

The present invention relates to a spindle device of a machine tool in which a spindle is retained by a support member with an adjustable retention force.

### BACKGROUND

In machine tools in which a rotary tool is mounted on a tip thereof and a workpiece is machined by moving the rotary tool relative to the workpiece, when the spindle is moved rapidly to a predetermined value such as a machining start position, the tool and the workpiece may collide with each other. In such a case, the bearings rotatably supporting the spindle may be damaged. In order to solve such a problem, Patent Literature 1 describe a spindle device wherein an inside ring which retains a work spindle is movably arranged in an outside ring, and a compression spring and a magnet can maintain the inside ring in an operating position within the outside ring with a predetermined retention force.

In the spindle device of Patent Literature 1, the spindle is retained using a magnet and a compression spring, and when an external force greater than the retention force generated by the magnet and the compression spring is exerted on the spindle, the inside ring moves relative to the outside ring, and as a result, damage to the spindle device, and in particular, to the spindle and the bearings which support it, can be prevented.

### [CITATION LIST]

### [PATENT LITERATURE]

[PTL 1] Japanese Unexamined Patent Publication (Kokai) No. 2012-086356

### SUMMARY

### [TECHNICAL PROBLEM]

However, in the invention of Patent Literature 1, the inside ring is retained in the outside ring by a retention force generated by a compression spring and a magnet. Thus, the retention force which retains the inside ring in the outside ring is always constant. Therefore, when the spindle is rotating at a high speed, i.e., when machining with a relatively small load, it is not possible to perform heavy cutting such as rough machining, during which the spindle rotates at low speed, with high efficiency while protecting the spindle. Specifically, if the retention force is excessively large, when the spindle collides with the workpiece or the like, the impact generated by the collision acts on the bearings for the spindle and damages the bearings. Conversely, if the retention force is small, in the case of rough machining, the load acting on the spindle is large, and as a result, the feed rate must be small, whereby machining efficiency becomes low.

The present invention aims to solve such problems of the prior art, and the object of the present invention is to provide a spindle device in which the spindle is protected during highspeed rotation of the spindle and machining efficiency is enhanced during rotation at low speeds by adjusting the retention force of the housing which rotatably supports the spindle in accordance with the usage state of the machine tool.

### [SOLUTION TO PROBLEM]

In order to achieve the above object, according to the present embodiment, there is provided a spindle device of a machine tool in which a tool or workpiece is retained on a spindle and which performs machining by moving a tool and/or a workpiece relative to each other, the spindle device comprising a support member having a bearing surface, a housing which releasably contacts the support member on the bearing surface and which rotatably supports the spindle, a first biasing device which presses the housing against the support member, and a pressing force adjustment unit which adjusts a pressing force of the first biasing device.

### [ADVANTAGEOUS EFFECTS OF INVENTION]

According to the present embodiment, depending on the usage state of the machine tool, for example, when the spindle device is moved rapidly or during cut-feeding, the pressing force by the first biasing device, which presses the housing of the spindle device against the support member can be adjusted. As a result, particularly in the case of rough machining or heavy cutting, the housing is firmly retained against the support member to improve machining efficiency, and when the spindle device is moved rapidly or during finishing, the pressing force which presses the housing against the support member is reduced, whereby the bearings which rotatably support the spindle can be reliably protected.

### BRIEF DESCRPITION OF DRAWINGS

FIG. 1 is a schematic sectional view of a spindle device according to a preferred embodiment of the present invention.
FIG. 2 is a sectional view identical to FIG. 1 of the case in which a spindle or a tool mounted on a spindle collides with a workpiece or the like while the spindle device moves rapidly in a plane perpendicular to the axis of rotation of the spindle.
FIG. 3 is a sectional view identical to FIG. 1, which illustrates a state in which a housing is separated from a support member as a result of insufficient pressing force for biasing the housing toward the support member when the spindle device performs cut-feeding in a direction parallel to the axis of rotation of the spindle.

### DESCRIPTION OF EMBODIMENTS

The preferred embodiments of the present invention will be described below with reference to the attached drawings.

The spindle device 10 according to the present embodiment comprises a housing 14 which is supported so as to be movable relative to a support member 12, and a spindle 16 which is rotatably supported in the housing 14. The spindle 16 is supported in the housing 14 by front bearings 18 and rear bearings 20 so as to be rotatable about an axis of rotation O. In the present embodiment, the spindle 16 is configured so that a tool, and in particular a rotary tool T such as an end mill, is retained on a tip thereof via a tool holder. A tapered hole 16a for attachment of the tool T mounted in the tool holder is formed on the tip of the spindle 16.

The spindle device 10 comprises a spindle motor for rotatably driving the spindle 16 about the axis of rotation O. The spindle motor comprises a stator 24 affixed to an inner peripheral surface of the housing 14, and a rotor 22 which is affixed to an outer peripheral surface of the spindle 16 so as to face the stator 24, which form a built-in motor. The spindle motor is not limited to built-in motors, but may be a servomotor (not illustrated) arranged outside the housing 14 and connected to a rear end of the spindle 16. The spindle motor 22, 24 is connected to an NC device (not illustrated) for controlling the machine tool, and the starting and stopping and rotation speed thereof are controlled by the NC device.

The housing 14 is a hollow member which houses the spindle 16 along the axis of rotation O, and has a flange 14a which radially protrudes from the outer peripheral surface thereof. A contact surface 14c is formed on the flange 14a. The contact surface 14c serves as a plane perpendicular to the axis of rotation O on the side opposite the bearing surface 12b. The housing 14 further has a tapered surface 14b. The tapered surface 14b is formed from a conical surface which expands in the rear end direction of the spindle 16. Though the tapered surface 14b is formed as a part of the flange 14a in the present embodiment, the position of the tapered surface is not limited to this, and the tapered surface can be arranged in any suitable position. A plurality of magnets 26 are arranged on the flange 14a.

The support member 12 can be a Z-axis slider or spindle head provided so as to be movable in one of three orthogonal X, Y, and Z-axis linear feed axes of the machine tool, for example, the Z-axis direction parallel to the axis of rotation O. The support member 12 has an aperture 12a for receiving the housing 14. A bearing surface 12b for supporting the lower surface of the flange 14a of the housing 14 is formed in the aperture 12a. The bearing surface 12b is at least partially formed from a spherical surface, which will be described later. The bottom surface of the flange 14a is formed in a shape which is complementary to the bearing surface 12b, and is at least partially spherical.

A tapered surface 12c having a shape which is complementary to the tapered surface 14b of the housing 14 is formed on the support member 12. Note that the Z-axis slider or spindle head forming the support member 12 is driven in the Z-axis direction by a Z-axis feed device (not illustrated) controlled by the NC device of the machine tool.

The spindle device 10 comprises a hydraulic cylinder 28 as a first pressing device for exerting an adjustable pressing force on the housing 14. The hydraulic cylinder 28 comprises a cylinder 28a and a piston 30. The cylinder 28a is affixed in the aperture 12a of the support member 12. A joint part 28b having a hydraulic pressure port for receiving hydraulic pressure from a hydraulic pressure source 100 is formed in the cylinder 28a.

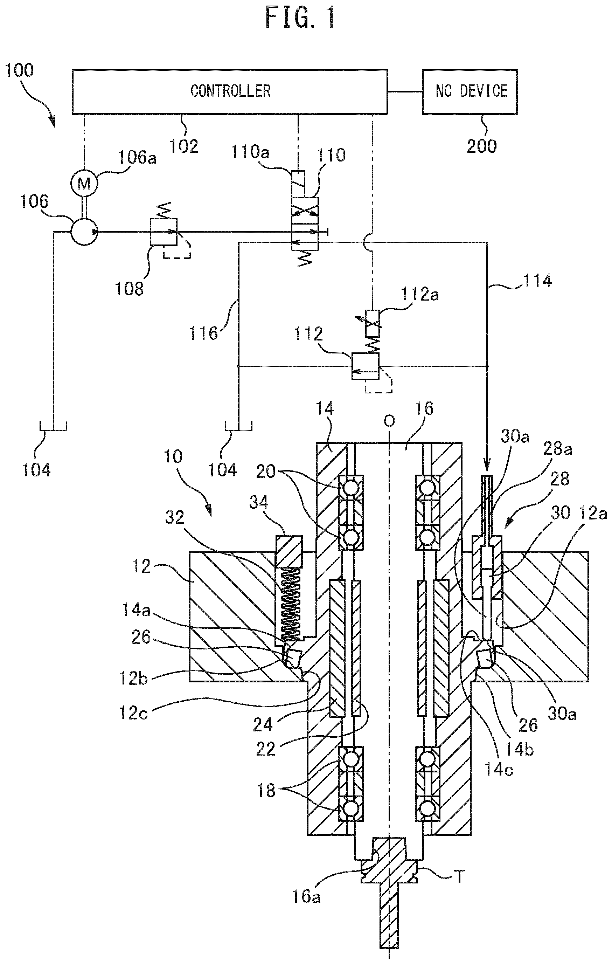

The piston 30 is arranged within the cylinder 28a, and a pressure chamber which is connected to the hydraulic pressure port is defined between the cylinder 28a and the piston 30. The piston 30 is advanced in the Z-axis direction (downward in FIGS. 1 to 3) by the hydraulic pressure supplied to the hydraulic pressure chamber from the hydraulic pressure source 100. The piston 30 comprises an action rod 30a which axially protrudes from the cylinder 28a. The tip of the action rod 30a is spherically formed. The tip of the action rod 30a contacts the contact surface 14c of the housing 14.

The spindle device 10 further comprises a coil spring 32 as a second pressing device for exerting a constant pressing force onto the housing 14. The coil spring 32 is retained in the aperture 12a by a spring retainer 34. The hydraulic cylinder 28 and the coil spring 32 are arranged on the same circumference about the Z-axis. The number of hydraulic cylinders and coil springs can be appropriately selected in accordance with, for example, the conditions required of the spindle device 10 such as machining load, the magnitude of the hydraulic pressure supplied to the hydraulic cylinder 28, and the resiliency of the coil spring 32. As an example, three hydraulic cylinders 28 and three coil springs 32 may be alternately arranged at equal angular intervals of 60° in the circumferential direction about the Z axis. As another example, three hydraulic cylinders 28 and nine coil springs may be arranged at intervals of 30° in the circumferential direction about the Z axis.

The hydraulic pressure source 100 which supplies hydraulic pressure to the hydraulic cylinder 28 comprises, as primary constituent elements, a controller 102, a pump 106 which pumps working oil from a tank 104 toward the hydraulic cylinder 28, a supply pipeline 114 which is connected to a discharge port of the pump 106, a pressure-reducing valve 108 and a directional control valve 110 which are provided in the supply pipeline 114, and a relief valve 112 which is provided in a return pipeline 116.

The controller 102 can comprise a CPU, RAM, ROM, a hard disc, an SSD, bidirectional busses connecting these components, related programs, a communication port for the NC device 200, a drive motor 106a of the pump 106, which is described later, and an output port. The output port outputs current for driving a solenoid 110a of the directional control valve 110 and a solenoid 112a of the relief valve 112. The controller 102 can be formed from a part of a machine control device for controlling related components of the machine tool such as a tool magazine (not illustrated) of the machine tool, a tool exchange device (not illustrated), and a machining fluid supply device. Alternatively, the controller 102 may be formed as a part of the NC device 200.

The controller 102 is connected to the drive motor 106a of the pump 106 and controls the starting and stopping of the pump 106. The pressure-reducing valve 108 reduces the pressure of the hydraulic oil discharged from the pump 106 to a predetermined pressure. The directional control valve 110 is a two-position four-port directional control valve 110 which moves between first and second positions. When the directional control valve 110 is in the first position illustrated in FIG. 1, the connection between the pump 106 and the hydraulic cylinder 28 is severed, whereby the hydraulic pressure chamber of the hydraulic cylinder 28 is open to the tank 104.

When the directional control valve 110 is in the second position, the discharge port of the pump 106 is connected to the pressure chamber of the hydraulic cylinder 28. As a result, the piston 30 advances along the Z-axis, whereby the tip of the action rod 30a contacting the contact surface 14c presses the housing 14 in the Z-axis direction. Since the relief valve 112 is open, a part of the working oil in the supply pipeline 114 passes through the return pipeline 116 and is discharged from the supply pipeline 114 to the tank 104, thus reducing the pressure in the supply pipeline 114. The opening of the relief valve 112 is controlled by the solenoid 112a. Thus, the pressing force generated by the hydraulic cylinder 28 is controlled by controlling the current value supplied to the solenoid 112a of the relief valve 112.

The mode of operation of the present embodiment will be described below. In the present embodiment, the spindle 16 and the tool T are moved relative to a workpiece (not illustrated) affixed to a table by the X, Y, and Z-axis feed axes of the machine tool while the rotary tool T mounted on the tip of the spindle 16 rotates to machine the workpiece. At this time, the housing 14 is pressed against and secured to the support member 12 by the coil spring 32, the magnets 26, and the hydraulic cylinder 28.

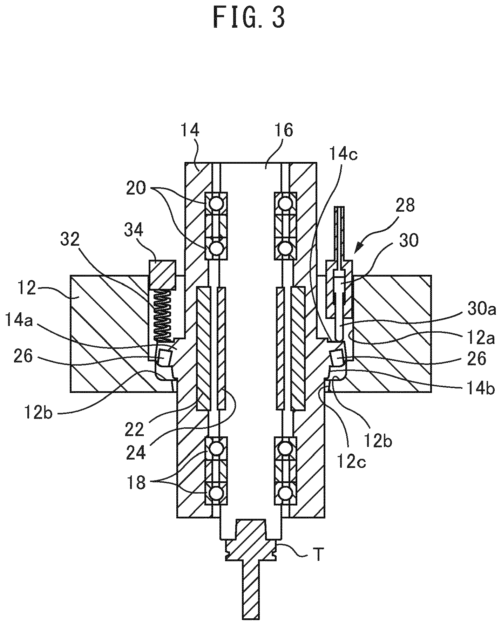

At this time, the controller 102 receives an NC program, which is read and interpreted by the NC device 200, from the NC device 200 and analyzes the NC program. The drive current supplied to the solenoid 112a of the relief valve 112 is controlled based on the instructions described in the analyzed NC program, and in particular, the feed mode of the spindle device 10, the feed speed, the spindle rotational speed, and the type of tool, the opening of the relief valve 112 is controlled, and the hydraulic pressure supplied to the hydraulic cylinder 28 is controlled in the following manner. Note that in the present invention, the feed mode of the spindle device 10 refers to the cut-feeding and rapid feeding modes of the relative feed operations between the spindle 16 and the workpiece by the feed axes, and the feed speed refers to the relative speed between the spindle 16 and the workpiece.
(1) When it is determined from the feed mode and/or feed speed of the spindle device 10 that the feeding of the spindle device 10 is rapid feeding, machining is not performed, and a load based on machining is not exerted on the tool T. Thus, whether the rotational speed of the spindle 16 is high or low, the opening of the relief valve 112 is increased to lower the hydraulic pressure supplied to the hydraulic cylinder 28, and the retention force of the housing 14 on the support member 12 is reduced. Alternatively, the relief valve 112 may be fully opened to reduce the hydraulic pressure supplied to the hydraulic cylinder 28 to substantially zero. As a result, when the tool T collides with the workpiece during rapid feeding, the housing 14 of the spindle device 10 can easily tilt with respect to the support member 12, whereby it is possible to prevent the bearings 18, 20 rotationally supporting the spindle 16 from becoming damaged. At this time, since the tip of the action rod 30a of the piston 30 of the hydraulic cylinder 28 is formed in a spherical shape, an appropriate pressing force can be applied to the bearing surface 14c even if the housing 14 is deflected.
(2) When it is determined from the feed mode and/or feed speed of the spindle device 10 that the feeding of the spindle device 10 is cut-feeding, if the rotational speed of the spindle 16 is low, it can be determined that rough machining or heavy cutting is performed. In the case of rough machining or heavy cutting, a large load is exerted on the tool T. Thus, the opening of the relief valve 112 is reduced to increase the hydraulic pressure supplied to the hydraulic cylinder 28, and the retention force of the housing 14 on the support member 12 is increased. As a result, the housing 14 is firmly held by the support member 12, and rough machining or heavy cutting can be performed.
(3) When it is determined from the feed mode and/or feed speed of the spindle device 10 that the feeding of the spindle device 10 is cut-feeding, if the rotational speed of the spindle 16 is high, it can be determined that finishing is performed. In the case of finishing, the load exerted on the tool is low. Thus, the opening of the relieve valve 112 is increased to reduce the hydraulic pressure supplied to the hydraulic cylinder 28. As a result, when the tool and the workpiece collide during finishing, the housing 14 of the spindle device 10 can easily tilt with respect to the support member 12, whereby it is possible to prevent the bearings 18, 20 rotationally supporting the spindle 16 from becoming damaged.
(4) When it is determined from the feed mode and/or feed speed of the spindle device 10 that the feeding of the spindle device 10 is cut-feeding and the tool T selected by the NC program is a drill, the opening of the relief valve 112 is reduced, regardless of the feed speed, to increase the hydraulic pressure supplied to the hydraulic cylinder 28. As a result, it is possible to firmly hold the housing 14 against the support member 12 to resist the large axial load acting on the tool T during drilling, and it is possible to prevent the housing 14 from separating from the support member 12 in the direction of the axis of rotation O during drilling as illustrated in, for example, FIG. 3.

According to the present embodiment, by variably controlling the pressing force of the housing 14 against the support member 12 based on the feed mode of the spindle 10, the feed speed, the spindle rotational speed, and the type of tool, the housing 14 can be firmly held against the support member 12 to improve machining efficiency, particularly in the case of rough machining or heavy cutting, and when the spindle device 10 moves rapidly or finishing is performed, the bearings 18, 20 that rotatably support the spindle 16 can be reliably protected.

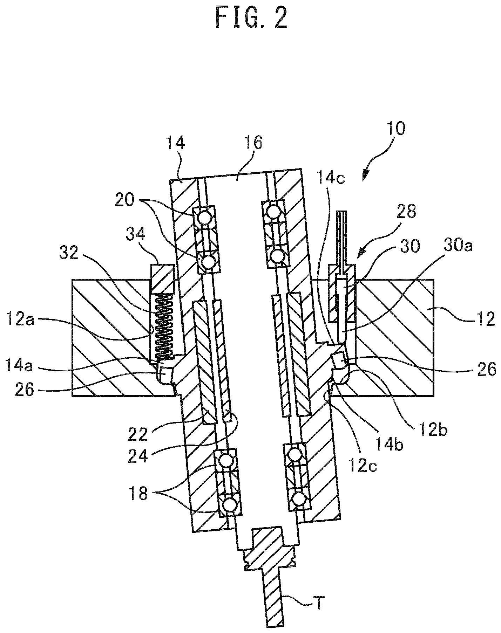

When the housing 14 separates from the support member 12, as shown in FIGS. 2 and 3, by feeding the spindle device 10 in the direction opposite the feed direction up to that point, due to the biasing force of the coil spring 32 and the magnetic force of the magnets 26, the housing 14 returns to the normal position with respect to the support member 12, as shown in FIG. 1. Thereafter, by further exerting a Z-axis direction pressing force by the hydraulic cylinder 28, e.g., the maximum pressing force, on the housing 14, the housing 14 is pressed into the aperture 12a of the support member 12. At this time, the tapered surface 14b of the housing 14 is fitted to the tapered surface 12c, which is formed on the support member 12 and which has a shape complementing the tapered surface 14b, whereby the housing 14 can be accurately positioned with respect to the support member 12.

Note that though the spindle device 10 is configured such that a rotary tool T is mounted on the tip of the spindle 16 in the embodiments described above, the present invention is not limited thereto, and the spindle device of the machine tool can be configured in a manner of a lathe in which a workpiece is attached to the tip of the spindle 16, and a cutting tool such as a bite tool is feed relative to the rotating workpiece to machine the workpiece.

### REFERENCE SIGNS LIST

- 10: Spindle Device
- 12: Support Member
- 12a: Aperture
- 12b: Bearing Surface
- 12c: Tapered Surface
- 14: Housing
- 14a: Flange
- 14b: Tapered Surface
- 14c: Contact Surface
- 16: Spindle
- 16a: Tapered Hole
- 18: Front Bearing
- 20: Rear Bearing
- 22: Rotor
- 24: Stator
- 26: Magnet
- 28: Hydraulic Cylinder
- 28a: Cylinder
- 28b: Joint Part
- 30: Piston
- 30a: Action Rod
- 100: Hydraulic Pressure Source
- 102: Controller
- 104: Tank
- 106: Pump
- 106: Drive Motor
- 108: Pressure-Reducing Valve
- 110: Directional Control Valve
- 110: Solenoid
- 112: Relief Valve
- 114: Supply Pipeline
- 116: Pipeline
- 200: Device

## Claims

1. A spindle device of a machine tool in which a tool or workpiece is retained on a spindle and which performs machining by moving a tool and/or a workpiece relative to each other, the spindle device comprising:
a support member having a bearing surface,
a housing which releasably contacts the support member on the bearing surface and which rotatably supports the spindle,
a first biasing device which presses the housing against the support member, and
a pressing force adjustment unit which adjusts a pressing force of the first biasing device.

2. The spindle device according to claim 1, wherein the first biasing device comprises a hydraulic cylinder having a piston for pressing the housing toward the support member.

3. The spindle device according to claim 2, comprising a controller for adjusting a hydraulic pressure supplied to the hydraulic cylinder based on a machining condition from an NC device of the machine tool.

4. The spindle device according to claim 2, further comprising a second biasing device for pressing the housing against the support member with a constant pressing force.

5. The spindle device according to claim 4, wherein the second biasing device comprises an elastic member for pressing the housing toward the support member.

6. The spindle device according to claim 5, wherein the second biasing device comprises a magnet for biasing the housing toward the support member.

7. The spindle device according to claim 5, wherein the elastic member of the second biasing device is a coil spring.

8. The spindle device according to claim 4, wherein a plurality of the first and second biasing devices are arranged on the same circumference centered on the axis of rotation of the spindle.
